# EUROPEAN PATENT APPLICATION

(11) **EP 4 299 178 A1**
(43) Date of publication of application: **03.01.2024**
(21) Application number: 22778322.2
(22) Date of filing: 19.01.2022
(51) Int. Cl.: B01L 3/00, G01N 1/31, G01N 15/10, C12M 1/00

(54) **MICROFLUIDIC CHIP, AND AUTOMATIC SEPARATION AND DETECTION SYSTEM AND METHOD FOR CIRCULATING TUMOR CELL**

(30) Priority: 30.03.2021 CN 202110337803
(71) Applicant: Shenzhen Yhlo Biotech Co., Ltd, 518116 Shenzhen (CN)
(72) Inventor: QIAN, Chungen, Shenzhen, Guangdong 518116 (CN); LI, Shunji, Shenzhen, Guangdong 518116 (CN); LIU, Bifeng, Shenzhen, Guangdong 518116 (CN); CHEN, Peng, Shenzhen, Guangdong 518116 (CN); WU, Liqiang, Shenzhen, Guangdong 518116 (CN); ZOU, Chang, Shenzhen, Guangdong 518116 (CN)
(74) Representative: Michalski Hüttermann & Partner Patentanwälte mbB
(86) International application number: PCT/CN2022/072673
(87) International publication number: WO 2022/206133

(57) **Abstract**

The present disclosure discloses a microfluidic chip, a system and a method for automatic separation and detection of circulating tumor cells. The microfluidic chip includes a density gradient centrifugation assembly, a cell capture assembly, and a reagent storage assembly. The density gradient centrifugation assembly is configured to carry out density gradient centrifugation on a whole blood sample to achieve separation and obtain a plasma layer, a monocyte layer, a Ficoll solution layer, and an erythrocyte and granulocyte layer. The cell capture assembly includes a capture channel, a capture inlet, and a capture outlet. The capture inlet and the capture outlet are in communication with the capture channel. An inner wall of the capture channel is provided with capture holes and negative-pressure capture chambers. Each capture hole is in communication with one negative-pressure capture chamber correspondingly. The reagent storage assembly is in communication with the capture inlet, and is configured for storing a staining solution and a wash solution. The microfluidic chip of the present disclosure can rapidly detect circulating tumor cells in peripheral blood, effectively reducing manual operation errors and reagent consumption, and completing sample detection with high throughput.

## Description

### TECHNICAL FIELD

The present disclosure relates to the field of cell detection, in particular to a microfluidic chip, an automatic separation and detection system and method for circulating tumor cells.

### BACKGROUND

The various tumor cells that spontaneously or therapeutically shed from solid tumor lesions (primary tumors or metastases) and present in the peripheral blood are generally called circulating tumor cells (CTC). Though most of them will undergo apoptosis or be phagocytosed after entering the peripheral blood, a few can escape and anchor to develop into metastases, increasing the risk of death in patients with malignant tumors. It has been confirmed in a large number of research data that the rapid detection of circulating tumor cells in blood has important application value for tumor detection, individualized treatment, curative effect evaluation and prognostic monitoring. Compared with traditional imaging and pathological diagnostic methods of tumors, the detection of circulating tumor cells has unique advantages. First of all, the circulating tumor cell detection method can simultaneously screen most various solid tumors such as lung cancer, gastric cancer, and liver cancer at one time, having a relatively large detection range. Meanwhile, only a blood test is required, avoiding the risk of metastasis caused by operations such as a needle aspiration biopsy. In addition, when evaluating the effect of tumor treatment, traditional imaging methods generally take several months, while the circulating tumor cell detection method can quickly evaluate the effect of treatment, having great practical significance in evaluating the effectiveness of tumor treatment, adjusting treatment strategies, and monitoring tumor recurrence and metastasis. The current clinical detection of circulating tumor cells in human peripheral blood has been recognized as one of the best detection methods.

Membrane filtration technology for separating tumor cells: its principle is to filtrate according to cell sizes through a membrane with a pore size of 8 µm, allowing lymphocytes and neutral granulocytes with a relatively small size to pass through, and retaining CTCs with a relatively large size on the membrane, thereby maintaining the viability and integrity of the cells, which is beneficial for subsequent detection. According to the size of the pores, abnormal monocytes and small circulating tumor cells will affect the final detection results, and the pores are easily blocked by cell clusters.

Density gradient centrifugation: its principle is to use the configured density of separation fluid to separate cells of different densities into different regions. The peripheral blood is spread on the upper layer of the separation medium, and the centrifugation accelerates the sedimentation of the cells with a density greater than that of the separation medium, while the cells with a density lower than that of the separation medium are gathered in the upper layer of the separation medium to achieve the separation effect. The density of the commonly used separation medium is lower than those of erythrocytes and granulocytes, allowing erythrocytes and granulocytes to settle at the bottom of the tube after centrifugation. Lymphocytes and monocytes have densities lower than or equal to that of the separation medium, and will float on the upper layer of the separation medium or suspend in the separation medium after centrifugation. Tumor cells also remain in the monocyte enriched layer. As tumor cells are present in the monocyte layer, there will be a large number of monocytes that interfere with the detection during extraction and separation. In addition, since the amount extracted is relatively small, it is difficult to enrich and identify CTCs.

Immuno-capture and detection method: its principle is to coat specific antigens or antibodies onto solid-phase carriers, including magnetic beads, microspheres, microcolumns, etc. When peripheral blood passes the surfaces, circulating tumor cells are specifically captured to achieve specific isolation and enrichment of CTCs. Then the captured cells are detected by specifically labeled antibodies or antigens. Since the origin of tumor cells is also certain types of cells in the human body, the procedure will be interfered by normal cells. Moreover, the specific antibodies prepared are expensive and in limited types, and can only capture specific CTCs, which has great limitations.

Immunofluorescence detection technology: its principle is to perform fluorescent immunolabeling on isolated and enriched specific circulating tumor cells for differential detection. Since the origin of tumor cells is also certain types of cells in the human body, the procedure will be interfered by normal cells. Moreover, the specific antibodies prepared are expensive and in limited types, and can only capture specific CTCs, which has great limitations.

With the development of chip technology, there are more and more measures for screening, enriching, and detecting circulating tumor cells, but basically the detection can only be performed by using specific immune labeling signals. The deficiency lies in the high cost and limited types of antibodies, which can only correspondingly detect specific types or classes of circulating tumor cells, and that the detection will be affected by the protein expression of normal cells. In addition, the isolation and enrichment by main chip-based technology rely on that the tumor cells are larger than normal cells. The deficiency of this technology lies in only identification of presence or absence of the isolated and enriched cells rather than the type thereof. In addition, immune cells themselves within cancer patients exhibit certain abnormalities, and often susceptible to bacterial or viral infections. The abnormal monocytes can compromise the accuracy of the isolation and enrichment process.

### SUMMARY

In view of this, there is a need to provide a microfluidic chip, a system and method for automatic separation and detection of circulating tumor cells. The automatic separation and detection system for circulating tumor cells in peripheral blood of the present disclosure can improve detection efficiency and accuracy of circulating tumor cells in peripheral blood.

A microfluidic chip includes a density gradient centrifugation assembly, a cell capture assembly, and a reagent storage assembly. The density gradient centrifugation assembly is configured to carry out density gradient centrifugation on a whole blood sample to achieve separation and obtain a plasma layer, a monocyte layer, a Ficoll solution layer, and an erythrocyte and granulocyte layer. The cell capture assembly includes a capture channel, a capture inlet, and a capture outlet. The capture inlet and the capture outlet are in communication with the capture channel. An inner wall of the capture channel is provided with a plurality of capture holes and a plurality of negative-pressure capture chambers, and each capture hole is in communication with one of the negative-pressure capture chambers correspondingly. The capture inlet is in communication with the density gradient centrifugation assembly for receiving the monocyte layer, and the capture outlet is configured to be in communication with a negative-pressure source. The size of each negative-pressure capture chamber is larger than that of one peripheral blood circulating tumor cell and smaller than that of two peripheral blood circulating tumor cells. The reagent storage assembly is in communication with the capture inlet, and is configured for storing a staining solution and a wash solution.

In an embodiment, the plurality of capture holes and the plurality of negative-pressure capture chambers are sequentially arranged on the inner wall of the capture channel along a direction from the capture inlet to the capture outlet.

In an embodiment, the capture channel exhibits a meandering distribution in the vertical direction of the microfluidic chip when the microfluidic chip is in use.

In an embodiment, the capture holes are located on a lower wall of the capture channel.

In an embodiment, a radial size of an opening of the capture hole toward the capture channel is smaller than a radial size of an interior of the capture hole.

In an embodiment, the reagent storage assembly includes a plurality of staining solution storage chambers and a plurality of wash solution storage chambers in communication with the capture inlet.

In an embodiment, the microfluidic chip further includes a waste solution chamber, wherein the waste solution chamber is in communication with the capture outlet, and the waste solution chamber is provided with a negative-pressure hole in communication with a negative-pressure source.

A system for automatically separating and detecting circulating tumor cells in the peripheral blood, includes a cell detection apparatus and the microfluidic chip, wherein the cell detection apparatus is configured to count the number of circulating tumor cells in the negative-pressure capture chambers of the microfluidic chip.

A method for automatically separating and detecting circulating tumor cells in the peripheral blood adopts the system for automatically separating and detecting circulating tumor cells in the peripheral blood. The method includes following steps.

A Ficoll separation solution and a whole blood sample are successively introduced to a sample inlet of the cell detection apparatus. The Ficoll separation solution and the whole blood sample successively enter the density gradient centrifugation assembly of the microfluidic chip. The density gradient centrifugation assembly performs the density gradient centrifugation to obtain a plasma layer, a monocyte layer, a Ficoll solution layer, and an erythrocyte and granulocyte layer. A negative pressure is applied to the capture channel through the capture outlet, so that the monocytes and the peripheral blood circulating tumor cells in the monocyte layer enter the capture channel, and then enters the negative-pressure capture chamber through the capture hole.

A first staining solution is introduced into the capture inlet from the reagent storage assembly to fix the cells for a predetermined time. A first wash solution is introduced to wash the first staining solution away. A second staining solution is introduced to stain for a predetermined time. A second wash solution is introduced to wash the excess second staining solution away.

An image of an individual or multiple negative-pressure capture chambers on microfluidic chip is acquired by using the cell detection apparatus for cellular morphological identification.

In an embodiment, the cells are fixed for 1 to 2 minutes and/or stained for 3 to 5 minutes.

Circulating tumor cell density gradient centrifugation technology, automatic cell staining technology, and high-throughput array cell imaging technology are integrated in the microfluidic chip in the present disclosure. An automatic peripheral blood circulating tumor cell separation and detection system for rapid detection of peripheral blood circulating tumor cells is designed and prepared, thereby effectively reducing manual operation errors, reducing reagent consumption, achieving high-throughput sample detection while obtaining the origin of circulating tumor cells and a ratio of circulating tumor cells to monocytes in the peripheral blood, which is very important for monitoring the development and prompt treatment of tumors.

The separation, enrichment, and detection of circulating tumor cells in the peripheral blood are integrated in a single microfluidic chip in the present disclosure. Each negative-pressure capture chamber retains a single cell, and the cells are analyzed on the basis of morphological characteristics of cells, which greatly improves the accuracy of analysis and detection. The automatic image analysis is finally performed by the cell detection apparatus, which improves the analysis efficiency. The whole process of analyzing and detecting circulating tumor cells in whole blood is completed in the microfluidic chip of the present disclosure, which greatly simplifies the operation process and shortens the detection time. Moreover, due to the miniaturization feature of the microfluidic chip, the consumption of reagents is greatly reduced. The automatic separation and detection system for circulating tumor cells in the peripheral blood of the present disclosure can greatly lower the circulating tumor cell detection cost and enhance overall accuracy of the detection process.

### BRIEF DESCRIPTION OF THE DRAWINGS

FIG. 1 is a schematic view of a microfluidic chip in an embodiment of the present disclosure.
FIG. 2 is a structural schematic partial view of a microfluidic chip in an embodiment of the present disclosure.
FIG. 3 is a structural schematic partial view of a capture channel of a microfluidic chip in an embodiment of the present disclosure.

### Explanation of reference signs:

10, microfluidic chip; 100, density gradient centrifugation assembly; 200, cell capture assembly; 210, capture channel; 220, capture inlet; 230, capture outlet; 240, capture hole; 250, negative-pressure capture chamber; 300, reagent storage assembly; 310, staining solution storage chamber; 320, wash solution storage chamber; 400, waste solution chamber; 410, negative-pressure hole; 21, plasma layer; 22, monocyte layer; 23, Ficoll solution layer; 24, erythrocyte and granulocyte layer.

### DETAILED DESCRIPTION

The embodiments of the present disclosure will now be described in detail with reference to the accompanying drawings in order to make the objects, technical solutions, and advantages of the present disclosure more clear. In the following description, numerous specific details are set forth in order to provide a thorough understanding of the present disclosure. However, the present disclosure can be implemented in many other ways different from those described herein, and those skilled in the art can make similar improvements without departing from the connotation of the present disclosure, so the present disclosure is not limited by the specific embodiments disclosed below.

In the description of the present disclosure, it should be understood that the terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc., indicate the orientations or positional relationships on the basis of the drawings. These terms are only for describing the present disclosure and simplifying the description, rather than indicating or implying that the related devices or elements must have the specific orientations, or be constructed or operated in the specific orientations, and therefore cannot be understood as limitations of the present disclosure.

In addition, the terms "first" and "second" are merely used for descriptive purposes, and should not be construed as indicating or implying relative importance or implying the quantity or order of the described technical features. Therefore, the features modified by "first" or "second" may explicitly or implicitly include at least one of the features. In the description of the present disclosure, "a plurality of' means at least two, such as two, three, etc., unless otherwise expressly and specifically defined.

In the present disclosure, unless otherwise clearly specified and defined, the terms "installed", "connected", "coupled", "fixed" and the like should be interpreted broadly. For example, an element, when being referred to as being "installed", "connected", "coupled", or "fixed" to another element, unless otherwise specifically defined, may be fixedly connected, detachably connected, or integrated to the other element; may be mechanically connected or electrically connected to the other element; and may be directly connected to the other element or connected to the other element via an intermediate element. For those of ordinary skill in the art, the specific meaning of the above-mentioned terms in the present disclosure can be understood according to specific circumstances.

In the present disclosure, unless otherwise specifically defined, an element, when being referred to as being located "on" or "under" another element, may be in direct contact with the other element or contact the other element via an intermediate element. Moreover, the element, when being referred to as being located "on", "above", or "over" another element, may be located right above or obliquely above the other element, or merely located at a horizontal level higher than the other element; the element, when being referred to as being located "under", "below", or "beneath" another element, may be located right below or obliquely below the other element, or merely located at a horizontal level lower than the other element.

It should be noted that an element, when being referred to as being "fixed" or "mounted" to another element, may be directly fixed or mounted to the other element or via an intermediate element. Such terms as "vertical", "horizontal", "up", "down", "left", "right" and the like used herein are for illustrative purposes only and are not meant to be the only ways for implementing the present disclosure.

Unless otherwise specified, all the technical and scientific terms herein shall be understood as the same meaning with those commonly accepted by a person skilled in the art. Such terms, as used herein, are for the purpose of describing exemplary examples of, and without limiting, the present disclosure. The term "and/or" as used herein refers to any and all combinations of one or more items recited.

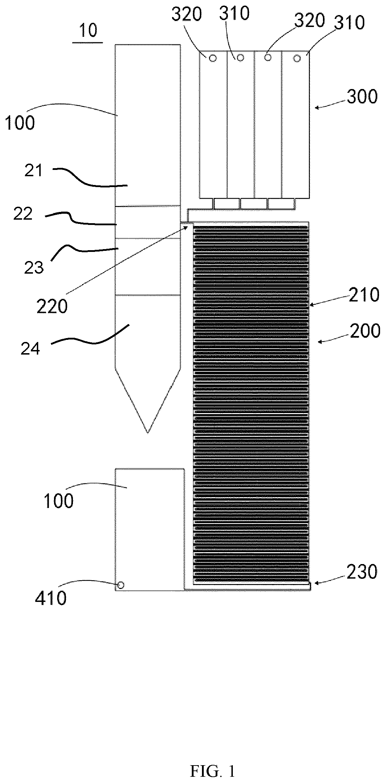

Referring to FIG. 1, an embodiment of the present disclosure provides a microfluidic chip 10.

The microfluidic chip 10 includes a density gradient centrifugation assembly 100, a cell capture assembly 200, and a reagent storage assembly 300.

The density gradient centrifugation assembly 100 is configured to carry out density gradient centrifugation on a whole blood sample to achieve separation and obtain a plasma layer 21, a monocyte layer 22, a Ficoll solution layer 23, and an erythrocyte and granulocyte layer 24.

Referring to FIG. 1, the cell capture assembly 200 includes a capture channel 210, a capture inlet 220, and a capture outlet 230. The capture inlet 220 and the capture outlet 230 are in communication with the capture channel 210. The inner wall of the capture channel 210 is provided with a plurality of capture holes 240 and a plurality of negative-pressure capture chambers 250. Each capture hole 240 is in communication with one negative-pressure capture chamber 250 correspondingly. The capture inlet 220 is in communication with the density gradient centrifugation assembly 100 for receiving the monocyte layer 22. The capture outlet 230 is configured to be in communication with a negative-pressure source. The size of the negative-pressure capture chamber 250 is greater than the size of one peripheral blood circulating tumor cell and smaller than the size of two peripheral blood circulating tumor cells.

The reagent storage assembly 300 is in communication with the capture inlet 220, and is configured for storing a staining solution and a wash solution.

In a specific example, the plurality of capture holes 240 and the plurality of negative-pressure capture chambers 250 are sequentially arranged on the inner wall of the capture channel 210 along the direction from the capture inlet 220 to the capture outlet 230.

In a specific example, as shown in FIG. 1, the capture channel 210 is arranged in a circuitous manner.

In a specific example, the capture channel 210 exhibits a meandering distribution in the vertical direction of the microfluidic chip 10 when the microfluidic chip 10 is in use.

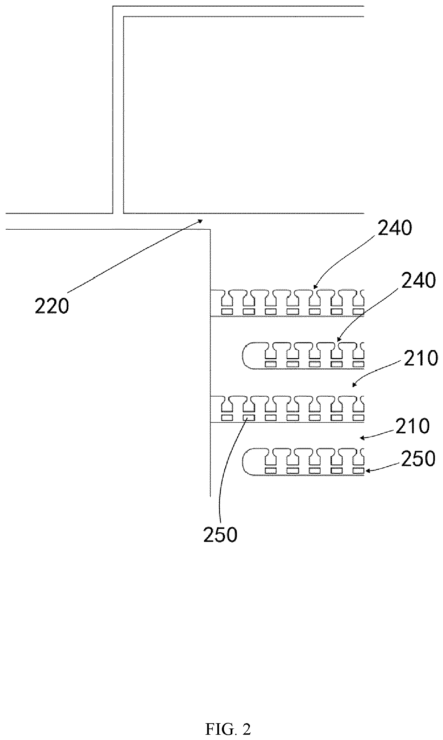

In a specific example, referring to FIG. 2, the capture holes 240 are located on the lower wall of the capture channel 210.

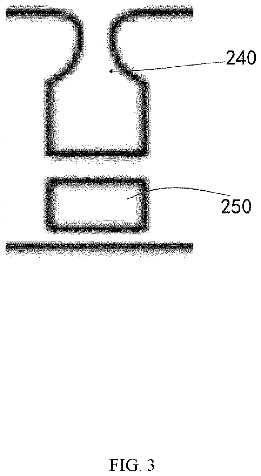

In a specific example, the radial size of the opening of the capture hole 240 toward the capture channel 210 is smaller than the radial size of the interior of the capture hole 240. The radial size of the opening of toward the capture channel 210 is smaller than the size of one peripheral blood circulating tumor cell . Referring to FIG. 3, the opening of the capture hole 240 is in the shape of a vase mouth, and the corresponding negative-pressure capture chamber 250 is connected at the bottom of each capture hole 240. The negative pressure is applied to provide driving force for the cell to pass through the "bottleneck" of the opening of the capture hole 240. When a circulating tumor cell in the peripheral blood enters the capture hole 240, the relatively small opening of the capture hole 240 prevents the cell from easily escaping from the capture hole 240. When one circulating tumor cell in the peripheral blood enters the capture hole 240, the suction force due to the negative pressure acting on other circulating tumor cells in the peripheral blood in the capture channel 210 is greatly diminished, which prevents a second circulating tumor cell in the peripheral blood from entering the same capture hole 240, thereby ensuring that only one circulating tumor cell in the peripheral blood resides within one capture hole 240 and one negative-pressure capture chamber 250.

In a specific example, referring to FIG. 1, the reagent storage assembly 300 includes multiple staining solution storage chambers 310 and multiple wash solution storage chambers 320 in communication with the capture inlet 220. The number of the staining solution storage chambers 310 and the number of the wash solution storage chambers 320 can be set according to actual needs. For example, referring to FIG. 1, there are two staining solution storage chambers 310 and two wash solution storage chambers 320. The two staining solution storage chambers 310 and the two wash solution storage chambers 320 are respectively in communication with the capture inlet 220 through connecting pipes.

In a specific example, referring to FIG. 1, the microfluidic chip 10 further includes a waste solution chamber 400. The waste solution chamber 400 is in communication with the capture outlet 230. The waste solution chamber 400 is provided with a negative-pressure hole 410 for communication with a negative-pressure source.

An embodiment of the present disclosure further provides an automatic separation and detection system for circulating tumor cells in the peripheral blood.

The automatic separation and detection system for circulating tumor cells in the peripheral blood includes a cell detection apparatus and the above-described microfluidic chip 10. The cell detection apparatus is not shown in FIGs. 1 to 3. The cell detection apparatus is configured to count the number of the peripheral blood circulating tumor cells in the negative-pressure capture chambers 250 of the microfluidic chip 10.

An embodiment of the present disclosure further provides an automatic separation and detection method for circulating tumor cells in the peripheral blood.

The automatic separation and detection method for circulating tumor cells in the peripheral blood uses the above-described automatic separation and detection system for circulating tumor cells in the peripheral blood. The method includes the following steps.

The Ficoll separation solution and the whole blood sample are successively introduced to a sample inlet of the cell detection apparatus. The Ficoll separation solution and the whole blood sample successively enter the density gradient centrifugation assembly 100 of the microfluidic chip 10. The density gradient centrifugation assembly 100 performs the density gradient centrifugation to obtain the plasma layer 21, the monocyte layer 22, the Ficoll solution layer 23, and the erythrocyte and granulocyte layer 24. A negative pressure is applied to the capture channel 210 through the capture outlet 230, so that the monocytes and the peripheral blood circulating tumor cells in the monocyte layer enter the capture channel 210, and then enters the negative-pressure capture chamber 250 through the capture hole 240.

A first staining solution (such as methanol) is introduced into the capture inlet 220 from the reagent storage assembly 300 to fix the cells for a predetermined time such as 1 to 2 minutes. A first wash solution (such as air) is introduced to wash the first staining solution away, by allowing the methanol to volatilize in the air. A second staining solution (such as Wright's staining solution) is introduced to stain for a predetermined time, such as 3 to 5 minutes. A second wash solution (such as a buffer solution) is introduced to wash the excess second staining solution away.

An image of an individual or multiple negative-pressure capture chambers 250 on microfluidic chip 10 is acquired by using the cell detection apparatus for cellular morphological identification.

Circulating tumor cell density gradient centrifugation technology, automatic cell staining technology, and high-throughput array cell imaging technology are integrated in the microfluidic chip 10 in the present disclosure. An automatic peripheral blood circulating tumor cell separation and detection system for rapid detection of peripheral blood circulating tumor cells is designed and prepared, thereby effectively reducing manual operation errors, reducing reagent consumption, achieving high-throughput sample detection while obtaining the origin of circulating tumor cells and a ratio of circulating tumor cells to monocytes in the peripheral blood, which is very important for monitoring the development and prompt treatment of tumors.

The separation, enrichment, and detection of circulating tumor cells in the peripheral blood are integrated in a single microfluidic chip 10 in the present disclosure. Each negative-pressure capture chamber 250 retains a single cell, and the cells are analyzed on the basis of morphological characteristics of cells, which greatly improves the accuracy of analysis and detection. The automatic image analysis is finally performed by the cell detection apparatus, which improves the analysis efficiency. The whole process of analyzing and detecting circulating tumor cells in whole blood is completed within the microfluidic chip 10 of the present disclosure, which greatly simplifies the operation process and shortens the detection time. Moreover, due to the miniaturization feature of the microfluidic chip 10, the consumption of reagents is greatly reduced. The automatic separation and detection system for circulating tumor cells in the peripheral blood of the present disclosure can greatly lower the cost for detection of circulating tumor cells, and enhance overall accuracy of the detection process.

The technical features of the above-mentioned embodiments can be combined arbitrarily. In order to make the description concise, not all possible combinations of the technical features are described in the embodiments. However, as long as there is no contradiction in the combination of these technical features, the combinations should be considered as in the scope of the present disclosure.

The above-described embodiments are only several implementations of the present disclosure, and the descriptions are relatively specific and detailed, but they should not be construed as limiting the scope of the present disclosure. It should be understood by those of ordinary skill in the art that various modifications and improvements can be made without departing from the concept of the present disclosure, and all fall within the protection scope of the present disclosure. Therefore, the patent protection of the present disclosure shall be defined by the appended claims.

## Claims

1. A microfluidic chip, comprising a density gradient centrifugation assembly, a cell capture assembly, and a reagent storage assembly, wherein the density gradient centrifugation assembly is configured to carry out density gradient centrifugation on a whole blood sample to achieve separation and obtain a plasma layer, a monocyte layer, a Ficoll solution layer, and an erythrocyte and granulocyte layer; the cell capture assembly comprises a capture channel, a capture inlet, and a capture outlet, the capture inlet and the capture outlet are in communication with the capture channel, an inner wall of the capture channel is provided with a plurality of capture holes and a plurality of negative-pressure capture chambers, each of the plurality of capture holes is in communication with one of the plurality of negative-pressure capture chambers correspondingly, the capture inlet is in communication with the density gradient centrifugation assembly for receiving the monocyte layer, the capture outlet is configured to be in communication with a negative-pressure source, and each of the plurality of negative-pressure capture chambers has a size that is larger than the size of one peripheral blood circulating tumor cell and smaller than the size of two peripheral blood circulating tumor cells; and the reagent storage assembly is in communication with the capture inlet, and is configured for storing a staining solution and a wash solution.

2. The microfluidic chip according to claim 1, wherein the plurality of capture holes and the plurality of negative-pressure capture chambers are sequentially arranged on the inner wall of the capture channel along a direction from the capture inlet to the capture outlet.

3. The microfluidic chip according to claim 1, wherein the capture channel exhibits a meandering distribution in the vertical direction of the microfluidic chip when the microfluidic chip is in use.

4. The microfluidic chip according to claim 3, wherein the plurality of capture holes are located on a lower wall of the capture channel.

5. The microfluidic chip according to any one of claims 1-4, wherein a radial size of an opening of each of the plurality of capture holes toward the capture channel is smaller than a radial size of an interior of the each of the plurality of capture holes.

6. The microfluidic chip according to any one of claims 1-4, wherein the reagent storage assembly comprises a plurality of staining solution storage chambers and a plurality of wash solution storage chambers in communication with the capture inlet.

7. The microfluidic chip according to any one of claims 1-4, further comprising a waste solution chamber, wherein the waste solution chamber is in communication with the capture outlet, and the waste solution chamber is provided with a negative-pressure hole in communication with a negative-pressure source.

8. A system for automatically separating and detecting circulating tumor cells in the peripheral blood, comprising a cell detection apparatus and the microfluidic chip according to any one of claims 1-7, wherein the cell detection apparatus is configured to count the number of circulating tumor cells in the negative-pressure capture chambers of the microfluidic chip.

9. A method for automatically separating and detecting circulating tumor cells in the peripheral blood, adopting the system according to claim 8, comprising steps of:
successively introducing a Ficoll separation solution and a whole blood sample to a sample inlet of the cell detection apparatus, so as to allow the Ficoll separation solution and the whole blood sample to successively enter the density gradient centrifugation assembly of the microfluidic chip; carrying out density gradient centrifugation by the density gradient centrifugation assembly to obtain a plasma layer, a monocyte layer, a Ficoll solution layer, and an erythrocyte and granulocyte layer; applying a negative pressure to the capture channel through the capture outlet, so as to allow monocytes and peripheral blood circulating tumor cells in the monocyte layer enter the capture channel and then enter the negative-pressure capture chambers through the capture holes;
introducing a first staining solution into the capture inlet from the reagent storage assembly to fix the cells for a predetermined time; introducing a first wash solution to wash the first staining solution away; introducing a second staining solution to stain the cells for a predetermined time; and introducing a second wash solution to wash the excess second staining solution away; and
acquiring an image of an individual or multiple negative-pressure capture chambers of the microfluidic chip by the cell detection apparatus for cellular morphological identification.

10. The method according to claim 9, wherein the cells are fixed for 1 to 2 minutes and/or stained for 3 to 5 minutes.
